(19) Europäisches Patentamt / European Patent Office / Office européen des brevets

(11) **EP 2 647 985 B1**

(12) **FASCICULE DE BREVET EUROPEEN**

(45) Date de publication et mention
de la délivrance du brevet:
**02.09.2015 Bulletin 2015/36**

(51) Int Cl.:
**G01N 25/18** *(2006.01)*     **G01N 33/00** *(2006.01)*

(21) Numéro de dépôt: **12163201.2**

(22) Date de dépôt: **04.04.2012**

(54) **Capteur de gaz et méthode de détermination d'une concentration de gaz dans un mélange binaire**

Gassensor und Bestimmungsmethode einer Gaskonzentration in einem Zweistoffgemisch

Gas sensor and method for determining a gas concentration in a binary mixture

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**09.10.2013 Bulletin 2013/41**

(73) Titulaire: **Belenos Clean Power Holding AG
2502 Bienne (CH)**

(72) Inventeurs:
• **De Coulon, Yves
CH-2075 Wavre (CH)**
• **Demarne, Vincent
CH-2000 Neuchâtel (CH)**

(74) Mandataire: **Giraud, Eric et al
ICB
Ingénieurs Conseils en Brevets SA
Faubourg de l'Hôpital 3
2001 Neuchâtel (CH)**

(56) Documents cités:
**EP-A1- 2 381 248     WO-A1-99/34201
WO-A1-2008/053729     WO-A1-2008/101822
US-A1- 2010 154 510**

**Description**

La présente invention se rapporte au domaine des capteurs de gaz de type thermique. Elle concerne plus précisément un capteur de gaz thermique pour la détermination d'une concentration de gaz dans un mélange binaire, à pression variable. Elle concerne également une méthode de détermination d'une concentration de gaz dans un mélange binaire à concentration variable.

Les capteurs de gaz de type thermique tirent partie des propriétés de conductivité thermique des gaz pour délivrer une information sur la nature d'un gaz, ou sa concentration dans un mélange gazeux. La conductivité thermique $\lambda$ d'un gaz est sa capacité à transporter de la chaleur, sous l'effet d'un gradient de température. C'est une grandeur intrinsèque d'un gaz à une pression et une température données, c'est pourquoi sa mesure est susceptible de fournir une indication sur la composition d'un mélange gazeux. Des capteurs de gaz thermiques sont notamment utilisés pour la mesure de la concentration d'hydrogène ($H_2$) dans un autre gaz, tel que l'oxygène ($O_2$), l'azote ($N_2$), l'argon (Ar), le dioxyde de carbone ($CO_2$), ou même l'air (en admettant qu'il est de composition fixe), car l'hydrogène se différencie fortement des autres gaz par sa haute conductivité thermique, en comparaison de celle de molécules plus lourdes. A titre d'information, on donne les valeurs suivantes :

$$\lambda_{Hydrogène} = 0.84 \ Wm^{-1}K^{-1}$$

$$\lambda_{air} = 0.012 \ Wm^{-1}K^{-1}$$

Les capteurs de gaz de type thermique comportent généralement une membrane, électriquement isolante et à faible inertie thermique, sur laquelle sont disposés des moyens de chauffage de la membrane et des moyens de mesure de sa température. La membrane est classiquement formée d'une couche mince d'oxyde ou de nitrure de silicium, déposée sur un substrat de silicium, lequel est gravé localement jusqu'à la face arrière de la membrane, de manière à ce qu'un flux de gaz puisse circuler de part et d'autre de celle-ci. Les moyens de chauffage et de mesure de la température comprennent respectivement une première et une deuxième résistance électrique, formées par des lignes de métal serpentant sur la face avant de la membrane. Le métal utilisé pour les moyens de mesure de la température présente une résistance variable en fonction de la température, de sorte que la mesure de la tension à ses bornes permet de déterminer la température de la membrane. Lorsque cette dernière est chauffée par les moyens de chauffage, sa température s'établit à une valeur stable, qui dépend de la conductivité thermique du mélange gazeux ou du gaz environnant. Il en résulte que la mesure de la température de la membrane fournit une indication sur la nature du gaz environnant ou sur la composition du mélange gazeux. Pour plus de détail sur la structure et le fonctionnement d'un tel capteur de gaz, on se référera à la demande DE4228484.

Un capteur de gaz du type décrit précédemment permet de mesurer une variable d'un mélange gazeux binaire, à savoir la concentration de l'un des gaz, à partir d'un paramètre, la température d'une membrane au contact physique dudit mélange. Il se prête particulièrement à la détermination de la concentration d'hydrogène dans un autre gaz, comme expliqué plus haut. L'intérêt de déterminer avec précision le pourcentage d'hydrogène dans un autre gaz, ou inversement, est considérable, car l'enjeu se situe, dans ce cas, au niveau de la sécurité des installations et du personnel. En effet, il est connu que l'hydrogène forme avec l'oxygène un mélange hautement explosif, même à de faibles concentrations. Il en va de même avec l'air, qui contient environ vingt pourcent d'oxygène. Un capteur de gaz de type thermique fournit une telle indication à faible coût et encombrement, d'où son intérêt technique important.

Toutefois, la mesure d'une variable d'un mélange gazeux binaire, en l'espèce la concentration de l'un des gaz, à partir d'un paramètre, la température d'une membrane à faible inertie thermique, n'est possible que si toutes les autres variables du mélange sont constantes. En particulier, la pression du mélange gazeux influence fortement sa conductivité. A pression variable, il devient impossible de déterminer la concentration d'un gaz dans un mélange binaire, à partir de la seule mesure de température de la membrane.

Une telle situation se rencontre, par exemple, au sein d'un électrolyseur. Ces dispositifs sont destinés notamment à la fabrication d'hydrogène gazeux à partir d'eau. Ils connaissent actuellement des développements importants car ils offrent une alternative énergétique propre aux énergies fossiles. La demande EP 2 048 759, par exemple, décrit une installation domestique de production et de stockage d'hydrogène gazeux à l'aide d'un électrolyseur alimenté par une installation photovoltaïque. L'hydrogène est, par la suite, utilisé comme carburant dans une pile à combustible, équipant, par exemple, un véhicule électrique.

Au sein d'un électrolyseur du type décrit dans la demande EP 2 048 759, l'hydrogène est fabriqué à partir d'eau liquide, à l'aide d'une anode et d'une cathode. En variante, l'électrolyseur est formé d'un empilement de cellules électrolytiques, comportant chacune une anode et une cathode. Un tel dispositif est décrit dans le document de brevet GB 1,145,751 Quelle que soit la structure de l'électrolyseur, l'hydrogène est produit côté cathode, tandis que de l'oxygène est produit côté anode. L'accumulation de ces gaz durant le processus de fabrication, respectivement côté cathode et côté anode, fait progressivement augmenter la pression au sein de l'électrolyseur jusqu'à une valeur de l'ordre d'une dizaine à quelques dizaines de bars. Etant donné les risques d'explosion d'un mélange oxygène-hydrogène, il est nécessaire de détecter toute présence d'hydrogène dans l'oxygène et inversement, sur toute la gamme de pression de fonctionnement de l'électrolyseur. Pour ce faire, et en raison de la limitation des capteurs de gaz de type thermique mentionnée plus haut, on adjoint généralement un capteur de pression au capteur de gaz installé dans l'électrolyseur. Il est alors possible de combiner les mesures de pression et température pour remonter à la concentration du gaz à déterminer. Toutefois, cette solution renchérit sensiblement le coût de ce type de détection, ce qui représente un inconvénient majeur pour une installation domestique.

Le document de brevet WO2008/101822 décrit un capteur de gaz thermique capable de déterminer les concentrations d'un mélange binaire de gaz en présence d'humidité. Le capteur comporte une première chaîne de traitement du signal à basse fréquence et une deuxième chaîne de traitement du signal à une fréquence plus élevée. Les signaux de sorties des deux chaînes sont combinés pour extraire la concentration d'un des gaz du mélange et de l'humidité. Ce document est muet en ce qui concerne la pression.

Le document de brevet EP 2 381 248 décrit un système du mesure d'un débit gazeux comprenant un capteur thermique. Le système étant conçu pour tenir compte de la diffusivité thermique. Selon ce document, le système effectue une pluralité de mesures à des températures différentes et combine les résultats de ces mesures pour déterminer la diffusivité.

Les documents de brevet US2010/0154510 et WO99/34201 décrivent des procédés pour déterminer la concentration d'un gaz ou la pression au moyen d'un capteur thermique. Ces méthodes sont basées sur la mesure du temps de réaction du capteur en réaction à un changement au niveau du chauffage.

Le but de la présente invention est de remédier à cet inconvénient, en proposant un capteur de gaz de type thermique, apte à déterminer la concentration d'un gaz dans un mélange binaire, à pression variable. Plus précisément, la présente invention concerne un capteur pour la détermination de la concentration d'un gaz dans un mélange binaire à pression variable, conforme à la revendication 1 annexée.

Grâce à ses caractéristiques, et en particulier au choix tel que décrit de la fréquence f de la source de courant alimentant les moyens de chauffage, le capteur de gaz selon l'invention permet de mesurer non pas un unique paramètre du mélange gazeux, à savoir une température stable en régime permanent, mais deux paramètres du système gazeux, l'un lié à sa statique, et l'autre lié à sa dynamique. Ces deux paramètres, injectés dans une fonction mathématique établie à cet effet, permettent de déterminer non pas une variable du mélange gazeux, mais deux, par exemple la concentration de l'un des gaz et la pression du mélange. La mesure de la pression du mélange gazeux par un dispositif indépendant adjoint au capteur de gaz devient superflue.

La présente invention concerne également une méthode pour la détermination de la concentration d'un gaz dans un mélange binaire à pression variable à l'aide d'un capteur de gaz, comportant une étape de mesure d'un premier paramètre caractéristique de la conduction du mélange binaire, une étape de mesure d'un deuxième paramètre caractéristique de la diffusivité du mélange binaire, et une étape de calcul, à partir desdits paramètres, et à l'aide d'une fonction mathématique préalablement établie et de coefficients caractéristiques du capteur, une valeur de la concentration dudit gaz et de la pression dudit mélange binaire.

D'autre caractéristiques et avantages de la présente invention apparaîtront à la lecture de la description qui suit, donnée uniquement à titre d'exemple et faite en référence aux dessins annexés dans lesquels :

- la figure 1 est une vue en coupe de la cellule de mesure d'un capteur de gaz selon l'invention, et

- la figure 2 montre un diagramme de principe de fonctionnement du capteur selon l'invention, et

- la figure 3 représente un exemple de signal de mesure dudit capteur.

En remarque préalable, on mentionnera que le capteur de gaz selon l'invention est particulièrement destiné à mesurer de l'hydrogène dans de l'oxygène, pour les raisons évoquées plus haut. Toutefois, son principe de fonctionnement et de détermination des variables d'un mélange gazeux, peut se généraliser à un mélange binaire quelconque, l'un des deux gaz pouvant être de l'air, en postulant que sa composition est constante. Dans la suite de cet exposé, on notera %H et %O les pourcentages respectifs d'hydrogène et d'oxygène composant le mélange binaire à analyser, et P sa pression, et il ne sera plus fait référence à d'autre gaz.

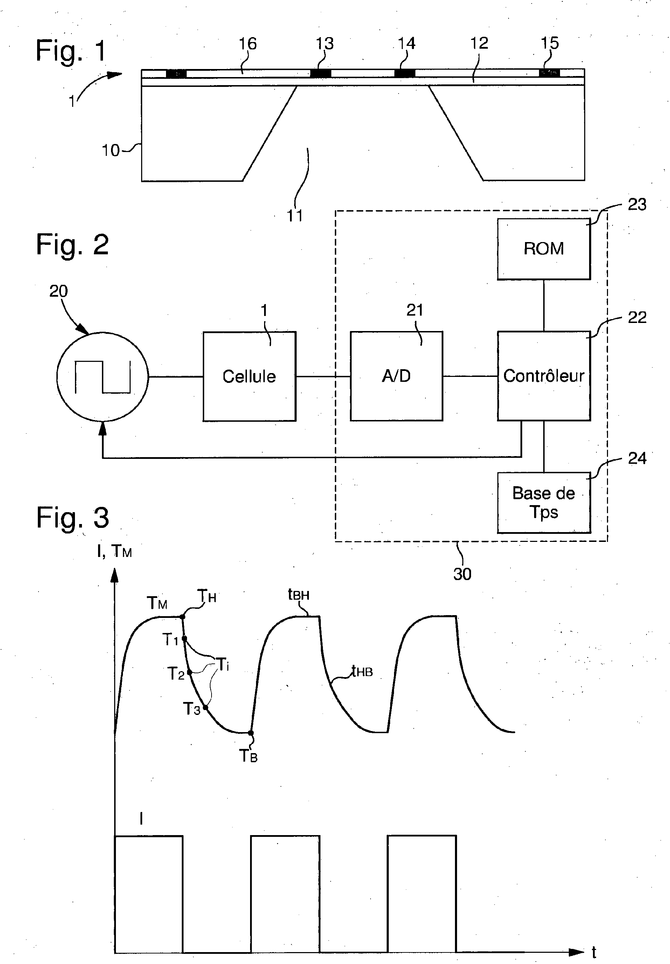

Le capteur de gaz thermique selon l'invention comporte, de manière conventionnelle, une cellule de mesure destinée à être plongée dans un mélange binaire oxygène / hydrogène à analyser, représentée schématiquement en figure 1 et référencée dans son ensemble 1. La cellule 1 comporte une base rigide 10, présentant une ouverture 11 en son centre, et recouverte d'une membrane 12 à faible inertie thermique, électriquement et thermiquement isolante. L'ouverture 11 permet à un gaz environnant de circuler et transporter de la chaleur de part et d'autre de la membrane 12. L'effet de la conductivité du gaz sur la température de la membrane 12, est ainsi prépondérant sur le refroidissement lié à d'autres phénomènes physiques, tels que rayonnement ou conduction de la chaleur par la base 10. Des moyens de chauffage 13 sont disposés sur la membrane 12, au niveau de l'ouverture 11, tandis que des moyens de mesure 14 de la température $T_M$ de la membrane 12 prennent place au voisinage des moyens de chauffage 13. Des moyens de mesure 15 de la température du milieu ambiant $T_A$ sont disposés à distance des moyens de chauffage 13, afin de ne pas en être soumis à leur effet.

Dans un mode de réalisation particulièrement avantageux, la cellule 1 est fabriquée à partir d'une plaque de silicium, formant la base rigide 10, et à l'aide des techniques de fabrication des dispositifs micromécaniques bien connues de l'homme de métier. La membrane 12 est constituée d'une couche de nitrure de silicium $Si_3N_4$ ou d'oxyde de silicium $SiO_2$, déposée sur la plaque de silicium, ou obtenue par nitruration ou oxydation thermique. Son épaisseur est typiquement de quelques centaines de nanomètres. L'ouverture 11 est généralement pratiquée par attaque chimique de la plaque de silicium depuis sa face arrière, après formation de la membrane 12. Les moyens de chauffage 13 ainsi que les moyens de mesure 14 de la température $T_M$ de la membrane 12 sont constitués par des lignes de métal serpentant sur la membrane 12, au dessus de l'ouverture 11. Le métal employé pour former les moyens de mesure 14, présente une résistance $R_M$ variant en fonction de la température de façon connue, à une pression de référence standard. La relation reliant la résistance $R_M$ à la température $T_M$ de la membrane 12, bien connue de l'homme de métier, prend la forme suivante :

$$R_M = R_0{}^*(1+\alpha T_M) \qquad\qquad (1)$$

dans laquelle le coefficient a est une caractéristique du métal formant la ligne de métal 14, généralement du platine, du nickel ou un alliage de ces deux métaux. Les moyens de mesure 15 de la température ambiante $T_A$ sont, de la même façon, formés de lignes de métal dont la résistance $R_A$ est thermo-variable. De façon similaire, la température ambiante $T_A$ est liée à la valeur de la résistance $R_A$ par la relation (1). Une couche de passivation 16, formée d'un oxyde de silicium $SiO_2$ ou d'un nitrure de silicium $Si_3N_4$, recouvre les lignes de métal 14 et 15.

La cellule 1 est alimentée par une source de courant alternatif 20 représentée schématiquement en figure 2, et fournissant un courant alternatif I de type carré, de fréquence f, aux moyens de chauffage 13. La fréquence f est comprise entre quelques hertz et quelques dizaines de hertz, en fonction de l'agencement et de la taille de la cellule 1. Typiquement, elle est de l'ordre de 20 hertz. Elle est choisie pour permettre aux moyens de chauffage 13 de chauffer et alternativement laisser refroidir la membrane 12, de manière à ce que sa température $T_M$ passe d'une première valeur stable $T_H$ à une deuxième valeur stable $T_B$, et inversement, par l'intermédiaire de régimes transitoires. Cet aspect du capteur de gaz selon l'invention apparaîtra plus clairement en regard de la figure 3. La température $T_M$ de la membrane 12 est donnée par les moyens de mesure 14, qui délivrent un signal analogique représentatif de $T_M$, en l'occurrence une valeur de la résistance $R_M$ de la ligne de métal formant les moyens de mesure 14. De même, La température ambiante $T_A$ est donnée par les moyens de mesure 15, qui délivrent un signal analogique représentatif de $T_A$, en l'occurrence une valeur de la résistance $R_A$ de la ligne de métal formant les moyens de mesure 15. Il convient de noter ici, que la température $T_M$ de la membrane 12 est une fonction de la température ambiante $T_A$ et de la conductivité thermique $\lambda$ du gaz environnant, elle-même fonction de la température ambiante $T_A$ et de la nature dudit gaz.

$$T_M = f(T_A, \text{conductivité } (T_A, \text{Gaz})) \qquad\qquad (2)$$

La température $T_M$ de la membrane 12 doit, par conséquent être préalablement corrigée au premier ordre de l'effet de la température ambiante $T_A$, afin de donner une information sur la conductivité du gaz environnant. A cet effet, c'est le ratio $R_M/R_A$ qui est délivré en sortie de la cellule 1, puis traité par un circuit électronique 30, comprenant un convertisseur analogique / numérique 21, un contrôleur 22, un module de mémoire 23 et une base de temps 24.

Le convertisseur analogique / numérique 21 disposé en sortie de la cellule 1, transforme le signal analogique $R_M/R_A$ en signal numérique, lequel est traité par le contrôleur 22. Le module mémoire 23 de type ROM (Read Only Memory), connecté au contrôleur 22, stocke une pluralité de coefficients caractéristiques du capteur de gaz, nécessaires au traitement du signal $R_M/R_A$. Ces coefficients seront explicités ultérieurement. Le contrôleur 22 est encore relié à une base de temps 24, formée par un quartz, et à la source de courant alternatif 20, dont il gère la fréquence f.

On se réfère maintenant à la figure 3 qui représente l'évolution de la température $T_M$ de la membrane 12, telle que mesurée par la résistance $R_M$, et celle du courant I d'alimentation des moyens de chauffage 13, en fonction du temps. Lorsqu'elle est chauffée par les moyens de chauffage 13 en présence d'un mélange gazeux oxygène / hydrogène, la membrane 12 voit sa température $T_M$ augmenter jusqu'à une valeur stable haute $T_H$, mesurée par les moyens de mesure 14. La valeur haute $T_H$ dépend de la conductivité thermique du mélange gazeux environnant qui transporte plus ou moins facilement la chaleur fournie par les moyens de chauffage 13. Quand les moyens de chauffage 13 cessent de chauffer la membrane 12, celle-ci refroidit jusqu'à une valeur stable basse $T_B$, sensiblement égale à la température du milieu ambiant. Entre les valeurs stables haute $T_H$ et basse $T_B$, la température $T_M$ de la membrane 12 passe par des régimes transitoires $t_{HB}$ et $t_{BH}$, respectivement de refroidissement et de réchauffement, qui sont principalement déterminés par la diffusivité thermique du mélange gazeux environnant.

Contrairement à la conductivité thermique, qui définit le comportement d'un gaz en mode statique, la diffusivité caractérise la capacité du gaz à évoluer d'une température à une autre, et détermine son comportement en mode dynamique. Comme la conductivité thermique, la diffusivité du mélange gazeux dépend de la nature des gaz, de leur concentration et de la pression ambiante, mais d'une manière très différenciée. Selon l'invention, les informations fournies par la température stable haute $T_H$ et par le mode transitoire de refroidissement $t_{HB}$, sont combinées pour déterminer la composition du mélange gazeux, quelle que soit sa pression.

En effet, des mesures et des essais nombreux et systématiques réalisés dans le cadre de la présente invention, ont permis de mettre en évidence que les différentes variables du gaz à analyser, %H, %O et P, sont reliées à la valeur $T_H$ et à la pente de refroidissement $pt_{HB}$, mesurée pendant le régime transitoire de refroidissement $t_{HB}$, par des fonctions mathématiques simples, dans lesquelles interviennent les coefficients mentionnés plus haut. Il convient de noter ici que le refroidissement de la membrane 12 suit, de façon connue, une loi exponentielle en $e^{-k/T}$. La pente $pt_{HB}$ de refroidissement $t_{HB}$, est alors définie par la fonction suivante :

$$pt_{HB} = d/dt(\ln((T_H - T_B)/(T_i - T_B))) \qquad (3)$$

dans laquelle, les points $T_i$, au nombre de trois, sont mesurés à différents intervalles durant le régime transitoire de refroidissement $t_{HB}$, par exemple, dans le cas présent, à 10, 14 et 18ms du point $T_H$. On notera que le choix du nombre de points $T_i$ et de l'intervalle de temps les séparant, dépend de l'agencement de la cellule 1 ainsi que de nombreux autres paramètres, tels que la nature des gaz composant le mélange binaire. Par conséquent, il n'obéit pas à une règle stricte, mais doit être effectué empiriquement de manière à rendre compte au mieux de la pente $pt_{HB}$.

Une fois le calcul de la pente $pt_{HB}$ effectué par le contrôleur 22, les différentes variables du mélange gazeux oxygène / hydrogène sont fournies par des fonctions mathématiques à adapter en fonction des conditions de travail du capteur selon l'invention. Ces fonctions sont plus ou moins complexes selon que le gaz à mesurer est de l'hydrogène dans l'oxygène, ou inversement, ou selon la gamme de pression du mélange gazeux. En effet, l'hydrogène a une conductivité thermique beaucoup plus élevée que l'oxygène. Il en résulte que la température stable haute $T_H$ est plus basse dans le cas d'un mélange gazeux formé essentiellement d'hydrogène, que dans le cas d'un mélange gazeux formé principalement d'oxygène. Le différentiel entre $T_H$ et $T_B$ est alors plus faible et la précision de la mesure est alors moindre. D'autre part, une gamme de pression de travail large introduit de plus grandes variations de comportement du mélange gazeux qu'une gamme de pression faible, ce qui doit être pris en compte dans le calcul des variables du mélange gazeux.

Il est proposé, dans la suite de cet exposé, deux fonctions mathématiques permettant la détermination de la composition du mélange gazeux, respectivement dans un cas de figure simple et dans un cas de figure plus complexe. Le premier cas correspond, par exemple, à la mesure d'une faible quantité d'hydrogène dans l'oxygène, sur une gamme de pression allant de 1 à 5 bars. Le deuxième cas de figure s'applique, par exemple, à la détection d'une faible quantité d'oxygène dans l'hydrogène, sur une gamme de pression allant de 1 à 20 bars. Il est entendu que l'ensemble des conditions de travail du capteur de gaz selon l'invention ne sauraient être traitées de façon exhaustive dans cet exposé, mais que les fonctions mathématiques données ci-dessous peuvent être adaptées et modifiées pour correspondre à de multiples conditions d'utilisation du capteur de gaz, sans sortir du cadre de l'invention.

Un premier exemple de situation de travail concerne la mesure d'une concentration d'hydrogène allant de 0 à 2 pourcent dans de l'oxygène, sur une gamme de pression variant de 0 à 5 bars. Il a été déterminé par les différents calculs et essais, que la pression P et le pourcentage d'hydrogène %H peuvent être représentés avec précision par les fonctions respectives suivantes :

$$P = a^*T_H + b^*T_H{}^2 + c^*pt_{HB} + d^*pt_{HB}{}^2 + e^*(T_H/pt_{HB}) + f \qquad (4)$$

$$\%H = A^*T_H + B^*T_H{}^2 + C^*pt_{HB} + D^*pt_{HB}{}^2 + E^*(T_H/pt_{HB}) + F \qquad (5)$$

dans lesquelles les coefficients a, b, c, d, e, f et A, B, C, D, E, F sont caractéristiques du capteur de gaz et sont déterminés par une procédure de calibration. Ladite calibration consiste à mesurer, pour trois différentes pressions et deux différentes concentrations d'hydrogène, dans les gammes de pression et concentration d'hydrogène de travail, les valeurs $T_H$ et $pt_{HB}$, puis à minimiser, à l'aide d'un solveur, les différences entre les valeurs de P et %H mesurées et calculées. Les équations (4) et (5) fournissent alors respectivement une valeur du pourcentage d'hydrogène avec une précision de 500ppm, et une valeur de la pression avec une précision de 0.2 bar.

Un deuxième exemple de situation de travail concerne la mesure d'une concentration d'oxygène allant de 0 à 1 pourcent dans de l'hydrogène, sur une gamme de pression variant de 0 à 20 bars. Dans ce cas, la pression P et le pourcentage d'oxygène %O peuvent être représentés avec précision par les fonctions respectives suivantes :

$$P = g^*T_H + h^*T_H^2 + i^*pt_{HB} + j^*pt_{HB}^2 + k^*(T_H/pt_{HB}) + l \qquad\qquad (6)$$

$$\%O =$$
$$G^*T_H + H^*pt_{HB} + I^*pt_{HB}^2 + J^*(T_H/pt_{HB}) + K^*(T_A-T_{ref})^*(P-P_{ref}) + L^*(T_A-T_{ref})^*(P-P_{ref})^2 + M \quad (7)$$

dans lesquelles les coefficients g, h, i, j k, l et G, H, I, J, K, L, M sont déterminés comme précédemment, $T_A$ est la température ambiante mesurée par les moyens de mesure 15, $T_{ref}$ est la température de référence à laquelle les points de calibration sont effectués et $P_{ref}$ est la pression de référence à laquelle la variation de résistance $R_M$ est mesurée en fonction de la température. Cette approche permet de tenir compte des effets de la température ambiante $T_A$ sur les courbes de dépendance de la conductivité du gaz en fonction de la pression. C'est la correction en température au deuxième ordre. Elle tient compte également des effets de la pression sur la dépendance en température des résistances de mesure 14 et 15. L'équation (7) ainsi améliorée fournit une valeur du pourcentage d'hydrogène avec une précision de 600ppm sur toute la gamme de pression de travail, et la pression est donnée par l'équation (6) avec une précision de 0.5 bar.

Ainsi a été décrit un capteur de gaz thermique pour la détermination d'une concentration de gaz dans un mélange binaire, à pression variable. Bien entendu, le capteur de gaz selon l'invention ne se limite pas aux modes de réalisation qui viennent d'être décrits et diverses modifications et variantes simples peuvent être envisagées par l'homme du métier sans sortir du cadre de l'invention tel que défini par les revendications annexées.

En particulier, les paramètres utilisés par le capteur de gaz selon l'invention sont la température stable haute $T_H$, et la pente de refroidissement $pt_{HB}$. L'homme de métier, dans un contexte particulier, pourrait être amené à choisir d'autres paramètres tels que la température stable haute $T_H$, et la pente de réchauffement de la membrane $pt_{BH}$, sans faire intervenir d'activité inventive. Les fonctions mathématiques fournissant les variables du système à partir des paramètres mesurés seraient alors potentiellement sensiblement différentes des fonctions explicitées précédemment.

On mentionne également que d'autres moyens de chauffage de la membrane 12 ou de mesure de sa température entrent dans le cadre de la présente invention. Il est connu, par exemple, que la température d'une membrane plongée dans un gaz à analyser, peut être fournie par une diode plutôt que par une ligne de métal à résistance thermovariable. On conçoit, par ailleurs, qu'un autre élément à faible inertie thermique, tel qu'un filament, puisse être employé en lieu et place d'une membrane.

On notera enfin, que la présente invention concerne une méthode de détermination de la concentration d'un gaz dans un mélange binaire à pression variable. Ladite méthode est basée sur la mesure d'un paramètre en mode stable et d'un paramètre en régime transitoire du mélange gazeux, et sur la détermination d'une fonction mathématique pour calculer, à partir de ces paramètres, les variables du mélange gazeux. On a décrit précédemment, un capteur de gaz particulièrement bien adapté à la mesure de ces valeurs et à l'application de cette méthode. Pour autant, la méthode selon l'invention ne se limite pas à un tel capteur, mais peut être étendue à tout capteur fournissant les mesures susmentionnées, par tout moyen approprié.

## Revendications

**1.** Capteur pour la détermination de la concentration d'un gaz dans un mélange binaire à pression variable, comportant :

    - une cellule (1) de mesure destinée à prendre place dans le mélange binaire, comprenant une membrane (12) à faible inertie thermique sur laquelle sont disposées côte à côte, des moyens de chauffage (13) de ladite membrane (12), et des moyens de mesure (14), délivrant un signal représentatif de la température ($T_M$) de ladite membrane (12),
    - une source de courant alternatif (20) de fréquence (f) destinée à alimenter lesdits moyens de chauffage (13), et
    - un circuit électronique(30),

    **caractérisé en ce que** la fréquence (f) de la source de courant alternatif (20) permet aux moyens de chauffage

(13) de chauffer et alternativement laisser refroidir ladite membrane (12) de manière à ce que sa température ($T_M$) passe d'une première valeur stable à une deuxième valeur stable, et inversement, par l'intermédiaire d'un régime transitoire, **en ce que** le circuit électronique (30) est agencé pour traiter ledit signal, en extraire un premier et un deuxième paramètres relatifs, respectivement, à ladite première valeur stable et au régime transitoire, et calculer, à partir de ces paramètres, et à l'aide d'une fonction mathématique préalablement établie et de coefficients caractéristiques dudit capteur, une valeur de la concentration dudit gaz et de la pression dudit mélange binaire, lesdites première et deuxième valeurs stables étant, respectivement, une température stable haute ($T_H$) de ladite membrane et une température stable basse ($T_B$), **en ce que** ledit régime transitoire est un régime transitoire de refroidissement ($t_{HB}$) de ladite membrane, et **en ce que** ledit premier paramètre est représentatif de ladite température stable haute ($T_H$), et ledit deuxième paramètre est représentatif de la vitesse de refroidissement de ladite membrane (12) ($pt_{HB}$) durant ledit régime transitoire de refroidissement.

2. Capteur selon la revendication 1, **caractérisé en ce que** ladite vitesse de refroidissement ($pt_{HB}$) de la membrane (12) est donnée par la fonction suivante :

$$pt_{HB} = d/dt(\ln((T_H-T_B)/(T_i-T_B))) \qquad (1)$$

dans laquelle les points $T_i$ sont choisis à différents intervalles durant le régime transitoire de refroidissement ($t_{HB}$) de ladite membrane (12).

3. Capteur selon la revendication 2, **caractérisé en ce que** la concentration d'un gaz dudit mélange binaire est une fonction polynomiale desdits paramètres représentatifs de la température stable haute ($T_H$) et de la vitesse de refroidissement ($pt_{HB}$) du type :

$$A{*}T_H + B{*}T_H^2 + C{*}pt_{HB} + D{*}pt_{HB}^2 + E{*}(T_H/pt_{HB}) + F \qquad (3)$$

Dans laquelle A, B, C, D, E et F sont compris parmi lesdits coefficients caractéristiques du capteur, et sont obtenus par calibration dudit capteur.

4. Capteur selon la revendication 2, **caractérisé en ce que** la pression dudit mélange binaire est une fonction polynomiale desdits paramètres représentatifs de la température stable haute ($T_H$) et de la vitesse de refroidissement ($pt_{HB}$) du type :

$$a{*}T_H + b{*}T_H^2 + c{*}pt_{HB} + d{*}pt_{HB}^2 + e{*}(T_H/pt_{HB}) + f \qquad (2)$$

dans laquelle a, b, c, d, e et f sont compris parmi lesdits coefficients caractéristiques du capteur, et sont obtenus par calibration dudit capteur.

5. Capteur selon la revendication 2, **caractérisé en ce que** la concentration d'un gaz dudit mélange binaire est une fonction polynomiale desdits paramètres représentatifs de la température stable haute ($T_H$), de la vitesse de refroidissement ($pt_{HB}$), de la température ambiante ($T_A$), d'une température de référence ($T_{ref}$), et d'une pression de référence ($P_{ref}$), du type :

$$G{*}T_H + H{*}pt_{HB} + I{*}pt_{HB}^2 + J{*}(T_H/pt_{HB}) + K{*}(T_A-T_{ref}){*}(P-P_{ref}) + L{*}(T_A-T_{ref}){*}(P-P_{ref})^2 + M \qquad (4)$$

dans laquelle G, H, I, J, K, L et M sont compris parmi lesdits coefficients caractéristiques du capteur, et sont obtenus par calibration dudit capteur, et dans laquelle ($T_{ref}$) est la température à laquelle ladite calibration est effectuée, et ($P_{ref}$) est la pression à laquelle ledit signal est calibré en fonction de la température de la membrane (12).

6. Capteur selon l'une des revendications 1 à 5, **caractérisé en ce qu'**il comprend, en outre, des moyens de mesure (15), délivrant un signal représentatif de la température ambiante ($T_A$) du mélange gazeux, et **en ce que** ledit signal représentatif de la température de la membrane (12) est préalablement corrigé du signal représentatif de la température ambiante.

7. Méthode pour la détermination de la concentration d'un gaz dans un mélange binaire à pression variable à l'aide d'un capteur de gaz, comportant :

   - une étape de mesure d'un premier paramètre caractéristique de la conduction dudit mélange binaire, le premier paramètre étant représentatif d'une température haute ($T_H$) d'un élément du capteur de gaz en régime stable,
   - une étape de mesure d'un deuxième paramètre caractéristique de la diffusivité dudit mélange binaire, le deuxième paramètre étant représentatif d'une vitesse de refroidissement ($pt_{HB}$) d'un élément du capteur en régime transitoire de refroidissement ($t_{HB}$), et
   - une étape de calcul, à partir desdits paramètres, et à l'aide d'une fonction mathématique préalablement établie et de coefficients caractéristiques dudit capteur, une valeur de la concentration dudit gaz et de la pression dudit mélange binaire,

   lesdits premier et deuxième paramètres étant mesurés en mode alternatif à une fréquence donnée (f).

8. Méthode selon la revendication 7, **caractérisée en ce que** ladite vitesse de refroidissement ($pt_{HB}$) d'un élément du capteur est donnée par la fonction suivante :

$$pt_{HB} = d/dt(\ln((T_H-T_B)/(T_i-T_B))) \qquad (1)$$

dans laquelle les points $T_i$ sont choisis à différents intervalles durant le régime transitoire de refroidissement ($t_{HB}$) dudit capteur.

9. Méthode selon la revendication 8, **caractérisée en ce que** la concentration d'un gaz dudit mélange binaire est une fonction polynomiale desdits paramètres représentatifs de la température stable haute ($T_H$) et de la vitesse de refroidissement ($pt_{HB}$) du type :

$$A^*T_H + B^*T_H{}^2 + C^*pt_{HB} + D^*pt_{HB}{}^2 + E^*(T_H/pt_{HB}) + F \qquad (3)$$

dans laquelle A, B, C, D, E et F sont compris parmi lesdits coefficients caractéristiques du capteur, et sont obtenus par calibration dudit capteur.

10. Méthode selon la revendication 8, **caractérisée en ce que** la pression dudit mélange binaire est une fonction polynomiale desdits paramètres représentatifs de la température stable haute ($T_H$) et de la vitesse de refroidissement ($pt_{HB}$) du type :

$$a^*T_H + b^*T_H{}^2 + c^*pt_{HB} + d^*pt_{HB}{}^2 + e^*(T_H/pt_{HB}) + f \qquad (2)$$

dans laquelle a, b, c, d, e et f sont compris parmi lesdits coefficients caractéristiques du capteur, et sont obtenus par calibration dudit capteur.

11. Méthode selon la revendication 8, **caractérisée en ce que** la concentration d'un gaz dudit mélange binaire est une fonction polynomiale desdits paramètres représentatifs de la température stable haute ($T_H$), de la vitesse de refroidissement ($pt_{HB}$), de la température ambiante ($T_A$), d'une température de référence ($T_{ref}$), et d'une pression de référence ($P_{ref}$), du type :

$$G^*T_H + H^*pt_{HB} + I^*pt_{HB}^2 + J^*(T_H/pt_{HB}) + K^*(T_A-T_{ref})^*(P-P_{ref}) + L^*(T_A-T_{ref})^*(P-P_{réf})^2 + M \qquad (4)$$

dans laquelle G, H, I, J, K, L et M sont compris parmi lesdits coefficients caractéristiques du capteur, et sont obtenus par calibration dudit capteur, et dans laquelle ($T_{ref}$) est la température à laquelle ladite calibration est effectuée, et ($P_{ref}$) est la pression à laquelle ledit signal est calibré en fonction de la température de la membrane.

## Patentansprüche

1. Sensor zum Bestimmen der Konzentration eines Gases in einem Zweistoffgemisch mit variablem Druck, der umfasst:

   - eine Messzelle (1), die dazu bestimmt ist, in dem Zweistoffgemisch angeordnet zu werden, und eine Membran (12) mit geringer thermischer Trägheit aufweist, auf der nebeneinander Mittel (13) zum Erwärmen der Membran (12) und Messmittel (14), die ein die Temperatur ($T_M$) der Membran (12) repräsentierendes Signal liefern, angeordnet sind,
   - eine Wechselstromquelle (20) mit Frequenz (f), die dazu bestimmt ist, die Heizmittel (13) zu versorgen, und
   - eine elektronische Schaltung (30),

   **dadurch gekennzeichnet, dass** die Frequenz (f) der Wechselstromquelle (20) den Heizmitteln (13) ermöglicht, die Membran (12) abwechselnd zu erwärmen und abzukühlen, derart, dass ihre Temperatur ($T_M$) von einem ersten stabilen Wert durch einen Übergangszustand zu einem zweiten stabilen Wert übergeht und umgekehrt, dass die elektronische Schaltung (30) dafür ausgelegt ist, das Signal zu verarbeiten, daraus einen ersten und einen zweiten Parameter zu extrahieren, die auf den ersten stabilen Wert bzw. auf den Übergangszustand bezogen sind, und anhand dieser Parameter und mit Hilfe einer vorher erzeugten mathematischen Funktion und mit Hilfe charakteristischer Koeffizienten des Sensors einen Wert der Konzentration des Gases und des Drucks des Zweistoffgemisches zu berechnen, wobei der erste und der zweite stabile Wert eine hohe stabile Temperatur ($T_H$) der Membran bzw. eine niedrige stabile Temperatur ($T_B$) sind, dass der Übergangszustand ein Abkühlungsübergangszustand ($t_{HB}$) der Membran ist und dass der erste Parameter die hohe stabile Temperatur ($T_H$) repräsentiert und der zweite Parameter die Abkühlungsgeschwindigkeit ($pt_{HB}$) der Membran (12) während des Abkühlungsübergangszustands repräsentiert.

2. Sensor nach Anspruch 1, **dadurch gekennzeichnet, dass** die Abkühlungsgeschwindigkeit ($pt_{HB}$) der Membran (12) durch die folgende Funktion gegeben ist:

$$pt_{HB} = \frac{d}{dt} \ln\left( \frac{T_H - T_B}{T_i - T_B} \right) \qquad (1)$$

   wobei die Punkte $T_i$ in verschiedenen Intervallen während des Abkühlungsübergangszustands ($t_{HB}$) der Membran (12) gewählt sind.

3. Sensor nach Anspruch 2, **dadurch gekennzeichnet, dass** die Konzentration eines Gases des Zweistoffgemisches eine Polynomfunktion der Parameter ist, die die hohe stabile Temperatur ($T_H$) und die Abkühlungsgeschwindigkeit ($pt_{HB}$) repräsentieren, und vom folgenden Typ ist:

$$A * T_H + B * T_H^2 + C * pt_{HB} + D * pt_{HB}^2 + E * \frac{T_H}{pt_{HB}} + F \qquad (3)$$

   wobei A, B, C, D, E und F aus den charakteristischen Koeffizienten des Sensors gewählt sind und durch Kalibrieren des Sensors erhalten werden.

4. Sensor nach Anspruch 2, **dadurch gekennzeichnet, dass** der Druck des Zweistoffgemisches eine Polynomfunktion der Parameter ist, die die hohe stabile Temperatur ($T_H$) und die Abkühlungsgeschwindigkeit ($pt_{HB}$) repräsentieren, und vom folgenden Typ ist:

$$a * T_H + b * T_H^2 + c * pt_{HB} + d * pt_{HB}^2 + e * \frac{T_H}{pt_{HB}} + f \qquad (2)$$

wobei a, b, c, d, e und f aus den charakteristischen Koeffizienten des Sensors gewählt sind und durch Kalibrieren des Sensors erhalten werden.

5. Sensor nach Anspruch 2, **dadurch gekennzeichnet, dass** die Konzentration eines Gases des Zweistoffgemisches eine Polynomfunktion der Parameter ist, die die hohe stabile Temperatur ($T_H$), die Abkühlungsgeschwindigkeit ($pt_{HB}$), die Umgebungstemperatur ($T_A$), eine Referenztemperatur ($T_{ref}$) und einen Referenzdruck ($P_{ref}$) repräsentieren, und vom folgenden Typ ist:

$$G * T_H + H * pt_{HB} + I * pt_{HB}^2 + J * \frac{T_H}{pt_{HB}} + K * \left(T_A - T_{ref}\right) * \left(P - P_{ref}\right) +$$
$$L * \left(T_A - T_{ref}\right) * \left(P - P_{ref}\right)^2 + M \qquad (4)$$

wobei G, H, I, J, K, L und M aus den charakteristischen Koeffizienten des Sensors gewählt sind und durch Kalibrieren des Sensors erhalten werden und wobei ($T_{ref}$) die Temperatur ist, bei der die Kalibrierung ausgeführt wird, und ($P_{ref}$) der Druck ist, bei dem das Signal als Funktion der Temperatur der Membran (12) kalibriert wird.

6. Sensor nach einem der Ansprüche 1 bis 5, **dadurch gekennzeichnet, dass** er außerdem Messmittel (15) umfasst, die ein Signal ausgeben, das die Umgebungstemperatur ($T_A$) des Gasgemisches repräsentiert, und dass das die Temperatur der Membran (12) repräsentierende Signal im Voraus anhand des die Umgebungstemperatur repräsentierenden Signals korrigiert wird.

7. Verfahren zum Bestimmen der Konzentration eines Gases in einem Zweistoffgemisch mit variablem Druck mit Hilfe eines Gassensors, das Folgendes umfasst:

   - einen Schritt des Messens eines ersten charakteristischen Parameters der Leitung des Zweistoffgemisches, wobei der erste Parameter eine hohe Temperatur ($T_H$) eines Elements des Gassensors im stabilen Zustand repräsentiert,
   - einen Schritt des Messens eines zweiten charakteristischen Parameters der Diffusionsfähigkeit des Zweistoffgemisches, wobei der zweite Parameter eine Abkühlungsgeschwindigkeit ($pt_{HB}$) eines Elements des Sensors im Abkühlungsübergangzustand ($t_{HB}$) repräsentiert, und
   - einen Schritt, um anhand dieser Parameter und mit Hilfe einer im Voraus erzeugten mathematischen Funktion und anhand von charakteristischen Koeffizienten des Sensors einen Wert der Konzentration des Gases und des Drucks des Zweistoffgemisches zu berechnen,

   wobei die ersten und zweiten Parameter im Wechselstrombetrieb mit gegebener Frequenz (f) gemessen werden.

8. Verfahren nach Anspruch 7, **dadurch gekennzeichnet, dass** die Abkühlungsgeschwindigkeit ($pt_{HB}$) eines Sensorelements durch die folgende Funktion gegeben ist:

$$pt_{HB} = \frac{d}{dt} \ln\left(\frac{T_H - T_B}{T_i - T_B}\right) \qquad (1)$$

wobei die Punkte $T_i$ in verschiedenen Intervallen während des Abkühlungsübergangszustands ($t_{HB}$) des Sensors gewählt werden.

9.  Verfahren nach Anspruch 8, **dadurch gekennzeichnet, dass** die Konzentration eines Gases des Zweistoffgemisches eine Polynomfunktion der Parameter ist, die die hohe stabile Temperatur ($T_H$) und die Abkühlungsgeschwindigkeit ($pt_{HB}$) repräsentieren, und vom folgenden Typ ist:

$$A * T_H + B * T_H^2 + C * pt_{HB} + D * pt_{HB}^2 + E * \frac{T_H}{pt_{HB}} + F \qquad (3)$$

wobei A, B, C, D, E und F aus den charakteristischen Koeffizienten des Sensors gewählt sind und durch Kalibrieren des Sensors erhalten werden.

10. Verfahren nach Anspruch 8, **dadurch gekennzeichnet, dass** der Druck des Zweistoffgemisches eine Polynomfunktion der Parameter ist, die die hohe stabile Temperatur ($T_H$) und die Abkühlungsgeschwindigkeit ($pt_{HB}$) repräsentieren, und vom folgenden Typ ist:

$$a * T_H + b * T_H^2 + c * pt_{HB} + d * pt_{HB}^2 + e * \frac{T_H}{pt_{HB}} + f \qquad (2)$$

wobei a, b, c, d, e und f aus den charakteristischen Koeffizienten des Sensors gewählt sind und durch Kalibrieren des Sensors erhalten werden.

11. Verfahren nach Anspruch 8, **dadurch gekennzeichnet, dass** die Konzentration eines Gases des Zweistoffgemisches eine Polynomfunktion der Parameter ist, die die hohe stabile Temperatur ($T_H$), die Abkühlungsgeschwindigkeit ($pt_{HB}$), die Umgebungstemperatur ($T_A$), eine Referenztemperatur ($T_{ref}$) und einen Referenzdruck ($P_{ref}$) repräsentieren, und vom folgenden Typ ist:

$$G * T_H + H * pt_{HB} + I * pt_{HB}^2 + J * \frac{T_H}{pt_{HB}} + K * \left( T_A - T_{ref} \right) * \left( P - P_{ref} \right) +$$
$$L * \left( T_A - T_{ref} \right) * \left( P - P_{ref} \right)^2 + M \qquad (4)$$

wobei G, H, I, J, K, L und M aus den charakteristischen Koeffizienten des Sensors gewählt sind und durch Kalibrieren des Sensors erhalten werden und wobei ($T_{ref}$) die Temperatur ist, bei der die Kalibrierung ausgeführt wird, und ($P_{ref}$) der Druck ist, bei dem das Signal als Funktion der Temperatur der Membran kalibriert wird.

## Claims

1.  Sensor for determining the concentration of a gas in a two-component mixture at variable pressure, comprising:

    - a measurement cell (1) intended to be located in the two-component mixture, comprising a membrane (12) of low thermal inertia, on which heating means (13) for said membrane (12) and measuring means (14) that supplies a signal representative of the temperature $T_M$ of said membrane (12) are arranged side by side,
    - a source of alternating current (20) of frequency (f) intended to supply said heating means (13) and
    - an electronic circuit (30),

    **characterised in that** said frequency (f) of the source of alternating current (20) is selected to enable the heating means (13) to heat and alternately allow said membrane (12) to be cooled so that its temperature $T_M$ passes from a first stable value to a second stable value and vice versa via a transient mode, **in that** the electronic circuit (30) is arranged to process said signal, to extract therefrom a first and a second parameter respectively relating to said first stable value and to the transient mode, and to calculate a value of the concentration of said gas and of the pressure of said two-component mixture from these parameters and with the assistance of a previously established mathematical function and characteristic coefficients of said sensor, said first and second stable values being respectively a high stable temperature ($T_H$) of said membrane and a low stable temperature ($T_B$), **in that** said transient mode is a transient cooling mode ($t_{HB}$) of said membrane, and **in that** said first parameter is representative of said high stable temperature ($T_H$), and said second parameter is representative of the rate of cooling of said membrane (12) ($pt_{HB}$) during said transient cooling mode.

2. Sensor according to claim 1, **characterised in that** the cooling rate ($pt_{HB}$) of the membrane (12) is given by the following function:

$$pt_{HB} = d/dt(\ln((T_H\text{-}T_B)/(T_i\text{-}T_B))) \qquad (1)$$

in which the points $T_i$ are chosen at different intervals during the transient cooling mode ($t_{HB}$) of said membrane (12).

3. Sensor according to claim 2, **characterised in that** the concentration of a gas of said two-component mixture is a polynomial function of said parameters representative of the high stable temperature ($T_H$) and the cooling rate ($pt_{HB}$) of the following type:

$$A^*T_H + B^*T_H^2 + C^*pt_{HB} + D^*pt_{HB}^2 + E^*(T_H/pt_{HB}) + F \qquad (3)$$

in which A, B, C, D, E and F are included in said characteristic coefficients of the sensor and are obtained by calibration of said sensor.

4. Sensor according to claim 2, **characterised in that** the pressure of said two-component mixture is a polynomial function of said parameters representative of the high stable temperature ($T_H$) and the cooling rate ($pt_{HB}$) of the following type:

$$a^*T_H + b^*T_H^2 + c^*pt_{HB} + d^*pt_{HB}^2 + e^*(T_H/pt_{HB}) + f \qquad (2)$$

in which a, b, c, d, e and f are included in said characteristic coefficients of the sensor and are obtained by calibration of said sensor.

5. Sensor according to claim 2, **characterised in that** the concentration of a gas of said two-component mixture is a polynomial function of said parameters representative of the high stable temperature ($T_H$), of the cooling rate ($pt_{HB}$), of the ambient temperature ($T_A$), of a reference temperature ($T_{ref}$) and of a reference pressure ($P_{ref}$) of the following type:

$$G^*T_H + H^*pt_{HB} + I^*pt_{HB}^2 + J^*(T_H/pt_{HB}) + K^*(T_A\text{-}T_{ref})^*(P\text{-}P_{ref}) + L^*(T_A\text{-}T_{ref})^*(P\text{-}P_{ref})^2 + M \qquad (4)$$

in which G, H, I, J, K, L and M are included in said characteristic coefficients of the sensor and are obtained by calibration of said sensor, and in which ($T_{ref}$) is the reference temperature at which the calibration is conducted and ($P_{ref}$) is the reference pressure at which said signal is calibrated as a function of the temperature of the membrane (12).

6. Sensor according to one of claims 1 to 5, **characterised in that** it additionally comprises measuring devices (15) that supply a signal representative of the ambient temperature ($T_A$) of the gaseous mixture, and that said signal representative of the temperature of the membrane (12) is firstly corrected from the signal representative of the ambient temperature.

7. Method for determining the concentration of a gas in a two-component mixture at variable pressure by means of a gas sensor comprising:

- a step of measuring a first characteristic parameter of the conduction of said two-component mixture, the first parameter being representative of a high temperature ($T_H$) of an element of the sensor in stable mode,
- a step of measuring a second characteristic parameter of the diffusivity of said two-component mixture, the second parameter being representative of a cooling rate ($pt_{HB}$) of an element of the sensor in transient cooling mode ($t_{HB}$), and
- a step of calculating a value of the concentration of said gas and the pressure of said two-component mixture from said parameters and with the assistance of a previously established mathematical function and characteristic coefficients of said sensor,
said first and second parameters being measured in alternating mode at a given frequency (f).

8. Method according to claim 7, **characterised in that** said cooling rate ($pt_{HB}$) of an element of the sensor is given by the following function:

$$pt_{HB} = d/dt(\ln((T_H-T_B)/(T_i-T_B))) \qquad (1)$$

in which the points $T_i$ are measured at different intervals during the transient cooling mode ($t_{HB}$) of said sensor.

9. Method according to claim 8, **characterised in that** the concentration of a gas of said two-component mixture is a polynomial function of said parameters representative of the high stable temperature ($T_H$) and the cooling rate ($pt_{HB}$) of the following type:

$$A*T_H + B*T_H{}^2 + C*pt_{HB} + D*pt_{HB}{}^2 + E*(T_H/pt_{HB}) + F \qquad (3)$$

in which A, B, C, D, E and F are included in said characteristic coefficients of the sensor and are obtained by calibration of said sensor.

10. Method according to claim 8, **characterised in that** the pressure of said two-component mixture is a polynomial function of said parameters representative of the high stable temperature ($T_H$) and the cooling rate ($pt_{HB}$) of the following type:

$$a*T_H + b*T_H{}^2 + c*pt_{HB} + d*pt_{HB}{}^2 + e*(T_H/pt_{HB}) + f \qquad (2)$$

in which a, b, c, d, e and f are included in said characteristic coefficients of the sensor and are obtained by calibration of said sensor.

11. Method according to claim 8, **characterised in that** the concentration of a gas of said two-component mixture is a polynomial function of said parameters representative of the high stable temperature ($T_H$), of the cooling rate ($pt_{HB}$), of the ambient temperature ($T_A$), of a reference temperature ($T_{ref}$), and of a reference pressure ($P_{ref}$) of the following type:

$$G*T_H + H*pt_{HB} + I*pt_{HB}{}^2 + J*(T_H/pt_{HB}) + K*(T_A-T_{ref})*(P-P_{ref}) + L*(T_A-T_{ref})*(P-P_{ref})^2 + M \qquad (4)$$

in which G, H, I, J, K, L and M are included in said characteristic coefficients of the sensor and are obtained by calibration of said sensor, and in which ($T_{ref}$) is the reference temperature at which the calibration is conducted, and ($P_{ref}$) is the reference pressure at which said signal is calibrated as a function of the temperature of the membrane.

Fig. 1

16    13    14    12    15

10

11

Fig. 2

23

ROM

20    1    21    22

Cellule    A/D    Contrôleur

24

Base de
Tps

30

Fig. 3

I, T$_M$

T$_M$    T$_H$    t$_{BH}$
T$_1$
T$_2$    T$_i$
T$_3$    t$_{HB}$

T$_B$

I

t

EP 2 647 985 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4228484
- EP 2048759 A
- GB 1145751 A
- WO 2008101822 A
- EP 2381248 A
- US 20100154510 A
- WO 9934201 A